# EUROPÄISCHE PATENTSCHRIFT

(11) **EP 0 642 090 B1**
(45) Veröffentlichungstag und Bekanntmachung des Hinweises auf die Patenterteilung: **07.04.1999**
(21) Anmeldenummer: 94112148.5
(22) Anmeldetag: 03.08.1994
(51) Int. Cl.: G06F 9/445, G06F 15/16

(54) **Elektronische Baugruppe mit wenigstens einer dezentralen Prozessoreinrichtung eines mehrprozessorgesteuerten Systems**
Electronic module comprising at least one decentralized processor in a multiprocessor system
Module électronique comprenant au moins un processeur décentralisé dans un système multiprocesseur

(30) Priorität: 30.08.1993 DE 9313005 U
(43) Veröffentlichungstag der Anmeldung: 08.03.1995
(73) Patentinhaber: SIEMENS AKTIENGESELLSCHAFT, 80333 München (DE)
(72) Erfinder: Köninger, Reinhard, Dipl.-Ing., D-45894 Gelsenkirchen (DE); Gericke, Harald, 46119 Oberhausen (DE)

(56) Entgegenhaltungen:
- EP-A- 0 500 973
- EP-A- 0 524 719
- EP-A- 0 536 793
- EP-A- 0 557 682
- WO-A-93/08532
- DE-A- 4 214 184

## Beschreibung

Die Erfindung betrifft eine elektronische Baugruppe gemäß dem Oberbegriff des Patentanspruchs 1.

Dezentrale Prozessoreinrichtungen dienen in modular strukturierten programmgesteuerten Einrichtungen zur Abwicklung intensiver, von der Gesamtsteuerung isolierbaren spezifischen Steuerungsaufgaben. Dezentrale Prozessoreinrichtungen werden insbesondere zur Implementierung von Schnittstellen sowie zur individuellen Ansteuerung von Peripherieeinrichtungen eingesetzt und dienen damit im wesentlichen zur Entlastung einer zentralen Prozessoreinrichtung.

Ein Beispiel für modular strukturierte programmgesteuerte Einrichtungen dieser Art sind Kommunikationssysteme, wie z.B. aus EP-0347644 bekannt. Die dezentralen Prozessoreinrichtungen sind im Sinne eines modularen Aufbaus jeweils auf einer Baugruppe angeordnet, um durch Baugruppenbestückung eine individuelle Anpassung des Systems an die Bedürfnisse seines Betreibers zu ermöglichen. Überdies haben wirtschaftliche Aspekte einerseits und das Bestreben nach möglichst großer Flexibilität andererseits dazu geführt, daß programmgesteuerte Einrichtungen insbesondere der obengenannten Art sowohl als sogenannte "verpromte Versionen" als auch als "ladbare Versionen" gefertigt und vertrieben werden.

Bei erstgenannten Versionen sind die Steuerprogramme für die dezentralen Prozessoreinrichtungen in Festwertspeichern hinterlegt, und Programmänderungen sind nur durch Auswechseln dieser Festwertspeicher möglich. Zweitgenannte Versionen erlauben es, bei Inbetriebnahme des Systems die Steuerprogramme für die dezentralen Prozessoreinrichtungen von einer externen Speichereinrichtung auf die betreffenden Baugruppen zu übertragen und in auf diesen Baugruppen befindlichen Schreib-Lesespeichern zu hinterlegen.

Bei der Erstellung von programmgesteuerten Einrichtungen dieser Art müssen demnach je nach gewünschter Version auch unterschiedliche Baugruppenversionen verwendet werden; nämlich im ersten Fall eine Baugruppe mit einem, das Steuerungsprogramm beinhaltenden Festwertspeicher und im zweiten Fall eine Baugruppe mit einem Schreib-Lesespeicher zum Einspeichern des Steuerprogrammes bei Inbetriebnahme des Systems.

In der deutschen Patentanmeldung mit dem amtlichen Aktenzeichen P 43 10 558.0 wird ein Verfahren zum bedarfsgesteuerten Programmladen dezentraler Prozessoreinrichtungen in einem digitalem Kommunikationssystem vorgestellt. Mit diesem Verfahren soll die bei einer ladbaren Version erforderliche Zeit zum Übermitteln der Steuerprogramme zu den Baugruppen minimiert werden, um eine schnellere Verfügbarkeit des Systems zu erzielen.

Der Einsatz von Flash-EPROMs zur änderbaren Programmspeicherung von Grund-Ein-/Ausgabe-Systemen (BIOS) eines Rechners ist bekannt. Der in WO-A-93/08532 beschriebene Stand der Technik sieht auf einer Mutterbaugruppe einen Flash-Speicher zur Speicherung von BIOS-Programmen für verschiedene Prozessorbaugruppen vor. Ein permanentes BIOS-Programm in einem Nur-Lesespeicher steuert das Laden eines CPU-abhängigen BIOS-Programms von einer Diskette in den Flash-Speicher bei Inbetriebnahme einer Baugruppe oder auf Anweisung des Benutzers.

Aufgabe der vorliegenden Erfindung ist es eine elektronische Baugruppe gemäß dem Oberbegriff des Patentanspruchs 1 anzugeben die gleichsam in einer "verpromten" als auch in einer "ladbaren Version" eines mehrprozessorgesteuerten Systems einsetzbar ist.

Diese Aufgabe wird erfindungsgemäß durch die kennzeichnenden Merkmale des Patentanspruchs 1 gelöst.

Als wesentlicher Vorteil einer derart ausgebildeten Baugruppe ist der geringere Aufwand bei der Fertigung, bei der Lagerhaltung sowie bei der Variantenbildung anzusehen.

Vorteilhafte Weiterbildungen der Erfindung sind in den Unteransprüchen angegeben.

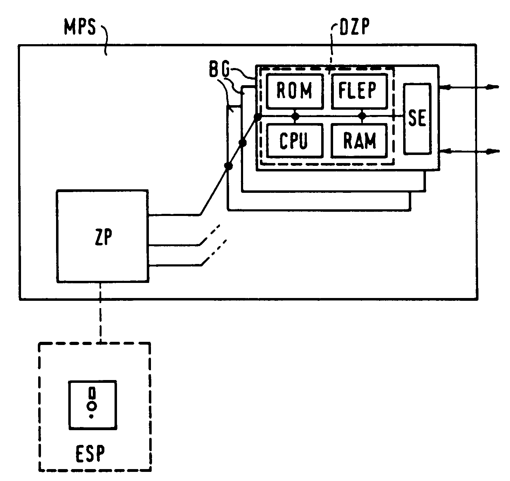

Ein Ausführungsbeispiel der Erfindung wird im folgenden anhand der Zeichnung näher erläutert.

Die Figur zeigt eine schematische Blockdarstellung mit den zur Erläuterung der Erfindung wesentlichen Komponenten in einem mehrprozessorgesteuerten System MPS, z.B. einem digitalen Kommunikationssystem. Nähere Angaben zur Hardwarearchitektur von Kommunikationssystemen sind der eingangs genannten Patentliteratur zu entnehmen.

Das mehrprozessorgesteuerte System weist eine zentrale Prozessoreinrichtung ZP und mehrere dezentrale Prozessoreinrichtungen DZP auf, die jeweils auf einer Baugruppe BG angeordnet sind. Die Baugruppen BG weisen außer der dezentralen Prozessoreinrichtung DZP üblicherweise noch schnittstellenspezifische Steuerelemente SE auf, die im wesentlichen zur elektrophysikalischen Anpassung an angeschlossene periphere Einrichtungen dienen.

In einem Kommunikationssystem sind Teilnehmeranschlußbaugruppen zum Anschluß von mehreren Kommunikationsendgeräten als Baugruppen BG mit jeweils einer dezentralen Prozessoreinrichtung DZP ausgebildet.

Die dezentrale Prozessoreinrichtung DZP auf der Baugruppe BG weist einen Mikroprozessor CPU einen Schreib-Lese-Speicher RAM, einen Nur-Lesespeicher ROM sowie einen "Flash-EPROM" Speicherbaustein FLEP auf. Ein Flash-EPROM ist ein nichtflüchtiger, löschbarer und anwenderprogrammierbarer Halbleiterspeicher. Ein Speicherbaustein dieser Art ist z.B unter der Bezeichnung "Flash-EPROM 57F64" aus dem "MEMORY COMPONENTS HANDBOOK" Seite 5-1 bis 5-20, INTEL 1988 bekannt. "Flash-EPROMS" sind im Aufbau mit UV-löschbaren EPROMS vergleichbar. Allerdings ist der zum Löschen bzw. zum Schreiben benötigte Energiebedarf der "Flash-EPROMS" wesentlich geringer, weshalb die "Flash-EPROMS" elektrisch löschbar sind.

Das Einschreiben und Löschen von Daten in "Flash-EPROMS" erfolgt üblicherweise mit speziellen Algorithmen, die auch in dem vorstehend angegebenen Handbuch beschrieben sind.

Das mehrprozessorgesteuerte System MPS kann als "verpromt Version" oder als "ladbare Version" ausgebildet sein. Im Falle einer "verpromten Version", sind die, den einzelnen Mikroprozessoren CPU zugehörigen Programme in Festwertspeichern (z.B. ROM, PROM, EPROM) hinterlegt. Ein Ändern der Programme ist nur durch Austauschen der betreffenden Speicherbausteine möglich. Der Vorteil einer "verpromten Version" liegt in den geringeren Herstellungskosten sowie in einer schnelleren Verfügbarkeit des Systems.

Bei einer "ladbaren Version" werden bei Inbetriebnahme des Systems die den einzelnen Mikroprozessoren CPU zur Implementierung baugruppenindividuelller Funktionen zugeordneten Programme von einer externen Speichereinrichtung ESP tranferiert und in einen dem betreffenden Mikroprozessor CPU zugänglichen Schreib-Lese-Speicher RAM eingespeichert. Der Vorteil einer "ladbaren Version" liegt damit darin, Programmänderungen jederzeit mit äußerst geringem Aufwand vornehmen zu können.

Eine gemäß der Erfindung bzw. gemäß einer Weiterbildung der Erfindung ausgebildete Baugruppe BG ist gleichwohl für eine ladbare als auch für eine "verpromte Version" eines mehrprozessorgesteuerten Systems MPS verwendbar. Bei der Fertigung der Baugruppe BG wird in den Nur-Lesespeicher ROM eine Programmladesequenz und eine Programmsequenz zur Implementierung der Lösch- und Programmieralgorithmen für den "Flash-EPROMS" gespeichert. In dem "Flash-EPROM" der Baugruppe BG wird das im Fall einer "verpromten Version" dem Mikroprozessor CPU zugeordnete Steuerprogramm eingespeichert.

Kommt diese Baugruppe BG in einer "verpromten Version" des mehrprozessorgesteuerten Systems MPS zum Einsatz, so bezieht der Mikroprozessor CPU auf der Baugruppe BG bereits bei erstmaliger Inbetriebnahme der Baugruppe BG seine Steueranweisungen aus dem "Flash-EPROM", weitere Maßnahmen sind nicht erforderlich.

Wird die Baugruppe BG in einer "ladbaren Version" des mehrprozessorgesteuerten Systems MPS eingesetzt, so wird beim Identifizieren der betreffenden Baugruppe BG - ein Identifiziern sämtlicher Baugruppen im System erfolgt in der Regel bei Inbetriebnahme des Systems - dem Mikroprozessor CPU eine Ladefreigabeanweisung übermittelt, die ihn dazu anregt, seine Steueranweisung im weiteren aus dem Nur-Lesespeicher ROM zu beziehen.

Bei Abarbeitung dieser Steueranweisungen überprüft der Mikroprozessor CPU, ob das im "Flash-EPROM" FLEP befindliche Steuerprogramm mit dem Steuerprogramm übereinstimmt, das von der externen Speichereinrichtung ESP über die zentrale Prozessoreinrichtung ZP geladen werden kann. Für den Fall, daß dabei das im "Flash-EPROM" gespeicherte Programm als ungültig oder verschieden zu dem ladbaren Programm ermittelt wird, wird mit Hilfe der im Nur-Lesespeicher ROM gespeicherten Programmladesequenz ein Programmtransfer durchgeführt, bei dem der auf der Baugruppe BG befindliche Mikroprozessor CPU mit der zentralen Prozessoreinrichtung ZP korrespondiert und das übermittelte Programm in den "Flash-EPROM" FLEP einspeichert. Die für die Einspeicherung bzw. das Löschen erforderliche Vorgehensweise ist als Programmsequenz ebenfalls in dem Nur-Lesespeicher ROM gespeichert. Nach erfolgter Einspeicherung des Steuerprogrammes erhält der Mikroprozessor CPU die Anweisung im weiteren seine Steueranweisungen aus dem "Flash-EPROM" FLEP zu beziehen.

Im weiteren Betrieb des mehrprozessorgesteuerten Systems MPS ist eine neue Einspeicherung des Steuerprogrammes in den "Flash-EPROM" FLEP nur erforderlich, wenn das Steuerprogramm für den Mikroprozessor CPU aktualisiert werden soll.

## Patentansprüche

1. Elektronische Baugruppe (BG) mit wenigstens einer dezentralen Prozessoreinrichtung (DZP) eines mehrprozessorgesteuerten Systems (MPS), insbesondere eines digitalen Kommunikationssystems, und mit einem Speicher zum speichern von Steueranweisungen für die Prozessoreinrichtung **gekennzeichnet** durch einen als Nur-Lesespeicher ausgebildeten ersten Speicherbereich (ROM), in dem eine, einen Programmtransfer auf die Baugruppe (BG) steuernde Ladesequenz gespeichert ist, und durch wenigstens einen als Flash-EPROM ausgebildeten zweiten Speicherbereich (FLEP), in dem vor einer erstmaligen Inbetriebnahme der Baugruppe (BG) eine Steuerprogrammsequenz zur Implementierung einer baugruppenindividuellen Funktion gespeichert ist und der im Falle eines als ladbare Version ausgebildeten mehrprozessorgesteuerten Systems (MPS) zur Speicherung einer bei dem Programmtransfer übermittelten neuen Steuerprogrammsequenz vorgesehen ist.

2. Elektronische Baugruppe nach Anspruch 1 dadurch **gekennzeichnet**, daß in dem zweiten Speicherbereich (FLEP) nach dem Programmtransfer die vor einer ersten Inbetriebnahme gespeicherte Steuerprogrammsequenz gelöscht ist.

3. Elektronische Baugruppe nach Anspruch 1 oder 2 **gekennzeichnet** durch einen zusammen mit einem Mikroprozessor (CPU) auf einem Baustein befindlichen ersten Speicherbereich (ROM).

4. Elektronische Baugruppe nach einem der vorherigen Ansprüche als Teilnehmeranschlußbaugruppe in einem digitalen Kommunikationssystem.

## Claims

1. Electronic module (BG) having at least one local processor device (DZP) of a multiprocessor-controlled system (MPS), especially a digital communications system, and having a memory for storing control instructions for the processor device, characterized by a first memory area constructed as read-only memory (ROM) in which a loading sequence controlling a program transfer to the module (BG) is stored, and by at least one second memory area constructed as flash EPROM (FLEP), in which a control program sequence for implementing a module-related function is stored before an initial start-up of the module (BG) and which, in the case of a multiprocessor-controlled system (MPS) constructed as loadable version, is intended for storing a new control program sequence transferred during the program transfer.

2. Electronic module according to Claim 1, characterized in that, after the program transfer, the control program sequence stored before an initial start-up is deleted in the second memory area (FLEP).

3. Electronic module according to Claim 1 or 2, characterized by a first memory area (ROM) located in a chip together with a microprocessor (CPU).

4. Electronic module according to one of the preceding claims as subscriber line module in a digital communications system.

## Revendications

1. Module (BG) électronique comportant au moins un dispositif (DZP) de processeur décentralisé d'un système (MPS) commandé par multiprocesseur, notamment d'un système de communication numérique, et comportant une mémoire pour mettre en mémoire des instructions de commande destinées au dispositif processeur, caractérisé par une première zone (ROM) de mémoire, réalisée en mémoire seulement de lecture, dans laquelle est mémorisée une séquence de chargement commandant un transfert de programmes au module (BG), et par au moins une deuxième zone (FLEP) de mémoire réalisée en Flash-EPROM, dans laquelle une séquence de programme de commande pour mettre en oeuvre une fonction spécifique au module est mémorisée avant la première mise en fonctionnement du module (BG) et qui, dans le cas d'un système (MPS) commandé par multiprocesseur réalisé en version chargeable, est prévue pour la mise en mémoire d'une nouvelle séquence de programme de commande transmise lors du transfert de programme.

2. Module électronique suivant la revendication 1, caractérisé en ce que, dans la deuxième zone (FLEP) de mémoire, la séquence de programme de commande mémorisée avant une première mise en service est effacée après le transfert de programme.

3. Module électronique suivant la revendication 1 ou 2, caractérisé par une première zone (ROM) de mémoire se trouvant sur un module conjointement avec un microprocesseur (CPU).

4. Module électronique suivant l'une des revendications précédentes comme module de raccordement d'abonné dans un système de communication numérique.
